# FASCICULE DE BREVET EUROPEEN

(11) **EP 3 922 815 B1**
(45) Date de publication et mention de la délivrance du brevet: **14.02.2024**
(21) Numéro de dépôt: 21305765.6
(22) Date de dépôt: 07.06.2021
(51) Int. Cl.: F01D 5/02, F01D 15/12, F01D 25/18, F02C 7/32, F16N 9/02

(54) **SYSTÈME DE LUBRIFICATION POUR FOURNIR UN FLUIDE AUX CANNELURES D'UN ARBRE D'ENTRAINEMENT**
SCHMIERSYSTEM ZUR FLUIDZUFUHR ZU DEN KEILNUTEN EINER ANTRIEBSWELLE
LUBRICATION SYSTEM FOR SUPPLYING A FLUID TO THE SPLINES OF A DRIVE SHAFT

(30) Priorité: 10.06.2020 FR 2006050
(43) Date de publication de la demande: 15.12.2021
(73) Titulaire: Aero Gearbox International, 92700 Colombes (FR)
(72) Inventeur: LEWIS, Nathan, 77550 MOISSY-CRAMAYEL (FR)
(74) Mandataire: Cabinet Beau de Loménie

(56) Documents cités:
- EP-A1- 2 711 505
- FR-A1- 2 543 654
- GB-A- 2 572 585
- US-A- 3 847 248
- US-A- 4 493 623

## Description

La présente invention concerne généralement le domaine des systèmes de lubrification dans un boîtier de relais. Plus spécifiquement, la présente invention concerne un système de lubrification dans un arbre d'entraînement d'un boîtier de relais d'accessoires, en particulier un insert pour fournir un fluide aux cannelures d'un arbre d'entraînement et un système pour fournir un fluide aux cannelures d'un arbre d'entraînement.

### Contexte

Un moteur de turbine d'un aéronef comprend typiquement un boîtier de relais d'accessoires pour actionner des systèmes d'accessoire entraînés mécaniquement, tels que des pompes à carburant, des pompes hydrauliques et des générateurs électriques, qui sont essentiels pour le fonctionnement du moteur et de l'aéronef. Comme cela est décrit par la demande de brevet français FR2977280A1, le boîtier de relais d'accessoires peut habituellement comprendre un ou plusieurs trains d'engrenages. Chaque train d'engrenages peut habituellement être composé d'une pluralité de roues dentées qui peuvent être entraînées en rotation pour entraîner les accessoires grâce à un arbre de transmission. L'arbre de transmission peut être couplé à un arbre de la turbine. Chaque accessoire peut comprendre un arbre d'entraînement d'accessoire comprenant un ou plusieurs ensembles de cannelures qui s'engrènent avec un ensemble de cannelures correspondant d'une roue dentée correspondante afin d'être entraîné ainsi. De plus, l'arbre de transmission peut comprendre un ou plusieurs ensembles de cannelures qui s'engrènent avec un ensemble correspondant de cannelures d'une roue dentée correspondante afin d'entraîner les roues dentées du train d'engrenages. La demande de brevet FR2543654A1 divulgue un système de lubrification d'un arbre flottant dans une boîte de vitesses ou des engrenages planétaires, le système utilisant un distributeur d'huile à l'intérieur de l'arbre, le distributeur comprenant une pièce d'arbre et un déflecteur. La demande de brevet EP2711505A1 divulgue un dispositif de transmission auxiliaire avec un arbre intégré dans un carter, qui peut être connecté au moins dans une région d'extrémité latérale avec un dispositif auxiliaire. Le brevet US3847248A décrit une cartouche de lubrification adaptée pour être installée sur une extrémité d'un arbre ou d'un engrenage.

En fonctionnement, la lubrification des pièces mobiles dans le boîtier de relais, telles que les cannelures, est nécessaire afin de refroidir, réduire la friction et ainsi optimiser la fonctionnalité et la durée de vie du boîtier de relais. Cependant, de nombreux systèmes de lubrification actuellement disponibles, en particulier des systèmes de lubrification monocoup, ne sont pas capables de fournir une quantité adéquate de lubrification afin de fournir la lubrification à un axe central d'un arbre d'entraînement d'accessoire, et donc à un autre ensemble de cannelures plus éloigné de l'arbre d'entraînement d'accessoire et/ou d'un arbre d'entraînement de couplage.

Il est souhaitable de proposer un système amélioré pour lubrifier des pièces mobiles dans un boîtier de relais qui est capable d'augmenter la quantité de lubrifiant fourni aux pièces mobiles dans le boîtier de relais afin de résoudre un ou plusieurs problèmes techniques décrits ci-dessus.

### Résumé

La présente invention concerne un insert pour fournir un fluide aux cannelures d'un arbre d'entraînement selon la revendication 1.

Selon les aspects de l'invention, une buse est configurée pour amener le fluide au réservoir pendant la rotation de l'insert.

Selon les aspects de l'invention, la partie de paroi d'insert externe élastiquement déformable comprend un matériau élastomère.

Selon les aspects de l'invention, la partie de paroi d'insert interne rigide est reliée à la partie de paroi d'insert externe élastiquement déformable.

Selon les aspects de l'invention, le conduit s'étend à travers la partie de paroi d'insert interne rigide.

Selon les aspects de l'invention, un système pour fournir un fluide aux cannelures d'un arbre d'entraînement comprend un arbre d'entraînement comprenant un ensemble de cannelures et un déversoir positionné de manière adjacente à l'ensemble de cannelures, l'arbre d'entraînement étant configuré pour tourner autour d'un axe de rotation, un insert selon l'un quelconque des aspects décrits ici, la paroi d'insert s'étendant de manière concentrique avec l'arbre d'entraînement le long de l'axe de rotation et dans lequel la buse est configurée pour décharger un jet de fluide pendant l'arrêt de la rotation de l'arbre d'entraînement.

Selon les aspects de l'invention, la buse est configurée pour amener le fluide au réservoir pendant la rotation de l'arbre d'entraînement.

Selon les aspects de l'invention, l'insert est en communication avec le déversoir et les cannelures au niveau d'une interface dans l'arbre d'entraînement.

Selon les aspects de l'invention, la buse est configurée pour diriger le jet du fluide à travers l'interface et au-delà du déversoir jusqu'aux cannelures lorsque la rotation de l'arbre d'entraînement est arrêtée.

Selon les aspects de l'invention, l'insert comprend la partie de paroi d'insert externe élastiquement déformable selon l'un quelconque des aspects décrits ici et a un premier diamètre extérieur à l'état non dilaté et un second diamètre extérieur à l'état dilaté et le premier diamètre extérieur est inférieur à un diamètre intérieur de l'arbre d'entraînement de sorte qu'un espace est défini entre l'insert et l'arbre d'entraînement à l'état non dilaté.

Selon les aspects de l'invention, l'insert comprend la partie de paroi d'insert interne rigide selon l'un quelconque des aspects décrits ici et la partie de paroi d'insert interne rigide est fixée sur l'arbre d'entraînement pour maintenir la position et empêcher la rotation de l'insert dans l'arbre d'entraînement.

Selon les aspects de l'invention, la buse est configurée pour diriger le jet du fluide vers les cannelures et vers l'axe de rotation lorsque la rotation de l'arbre d'entraînement est arrêtée.

De la manière décrite et selon les aspects illustrés ici, l'insert et le système sont configurés pour augmenter une quantité de fluide à fournir aux pièces mobiles dans un boîtier de relais en produisant un jet de fluide de sorte que le fluide est fourni à un axe central d'un arbre d'entraînement d'accessoire, et donc à un autre ensemble de cannelures plus loin de l'arbre d'entraînement d'accessoire et/ou d'un arbre d'entraînement de couplage.

### Brève description des dessins

Les aspects d'un mode de réalisation sont décrits en référence aux dessins, dans lesquels les mêmes numéros de référence désignent les mêmes éléments :
[Fig. 1] La figure 1 est une vue en coupe latérale d'un système de lubrification destiné à être utilisé dans un boîtier de relais (ci-après « le système ») selon les aspects de l'invention;
[Fig. 2] La figure 2 est une vue en perspective latérale du système selon la figure 1 représentant un arbre d'entraînement du système en coupe et un insert du système en coupe partielle dans un état non dilaté ;
[Fig. 3] La figure 3 est une vue en perspective latérale du système de la figure 1 représentant l'arbre d'entraînement du système en coupe et l'insert du système dans un état dilaté ;
[Fig. 4] La figure 4 est une vue partielle agrandie prise sur la figure 3, en insistant sur une buse du système ;
[Fig. 5A] La figure 5A est une vue en coupe de face de l'insert du système de la figure 1 à l'état non dilaté et représentant un volume de fluide affaissé ; et
[Fig. 5B] La figure 5B est une vue en coupe de face de l'insert du système de la figure 1 à l'état dilaté et représentant un volume de rotation de fluide.

### Description détaillée

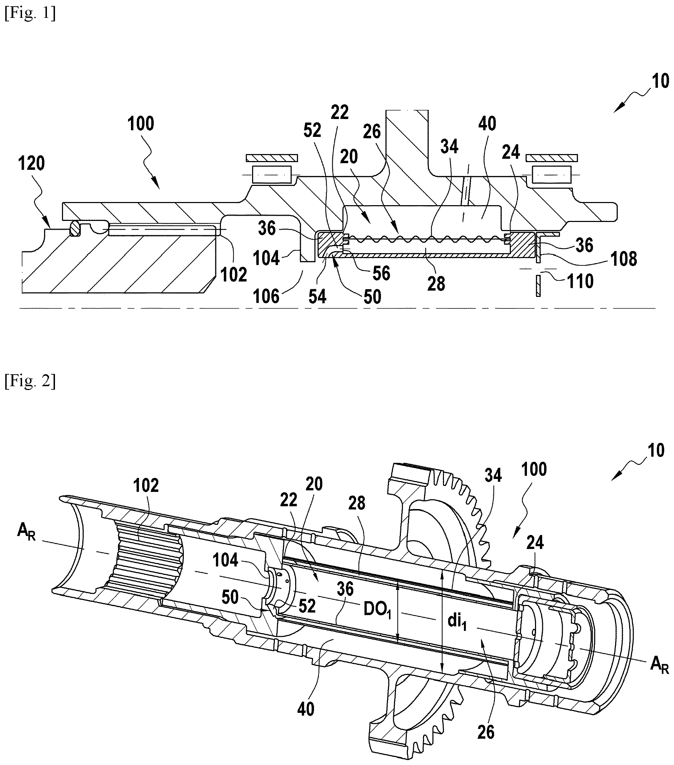

Un mode de réalisation d'un système de lubrification (ci-après « le système ») destiné à être utilisé dans un boîtier de relais selon les aspects de l'invention est décrit maintenant en référence aux figures 1 à 5B, dans lequel les mêmes numéros de référence représentent les mêmes pièces, et est généralement désigné par le numéro de référence 10. En particulier, on décrit un insert 20 du système 10 destiné à être utilisé dans un boîtier de relais selon les aspects de l'invention. Bien que le système 10 et l'insert 20 soient décrits en référence à des exemples spécifiques, il faut comprendre que des modifications et des changements peuvent être apportés à ces exemples sans s'éloigner de la portée générale, telle que définie par les revendications. En particulier, les caractéristiques individuelles des différents modes de réalisation représentés et/ou mentionnés ici peuvent être combinées en modes de réalisation supplémentaires. Par conséquent, la description et les dessins doivent être considérés dans un sens illustratif plutôt que restrictif. Les figures, qui ne sont pas nécessairement à l'échelle, illustrent des aspects illustratifs et ne sont pas prévues pour limiter la portée de l'invention. Les aspects illustratifs illustrés sont prévus uniquement à titre exemplaire.

Le terme « exemplaire » est utilisé dans le sens « d'exemple » plutôt que « idéal ». Alors que les aspects de l'invention sont favorables à différentes modifications et formes en variante, leurs spécificités ont été présentées à titre d'exemple dans les dessins et seront décrites de manière détaillée. Il faut cependant comprendre que l'intention n'est pas de limiter les aspects de l'invention au(x) mode(s) de réalisation particulier(s) décrit(s). Au contraire, l'intention de la présente invention est de couvrir toutes les modifications, tous les équivalents et les variantes se trouvant dans la portée de l'invention, telle que définie par les revendications.

Différents matériaux, procédés de construction et procédés de fixation seront abordés dans le contexte du (des) mode(s) de réalisation décrit(s). L'homme du métier reconnaîtra des substituts connus pour les matériaux, les procédés de construction et les procédés de fixation, dont tous sont envisagés comme étant compatibles avec le(s) mode(s) de réalisation décrit(s) et sont prévus pour être englobés par les revendications jointes.

Lorsqu'un élément ou caractéristique est désigné(e) ici comme étant « sur », « mis(e) en prise avec », « raccordé(e) à » ou « couplé(e) à » un autre élément ou caractéristique, il (elle) peut être directement sur, mis(e) en prise, raccordé(e) ou couplé(e) à un autre élément ou caractéristique, ou des éléments ou caractéristiques intermédiaires peuvent être présents (présentes). En contraste, lorsqu'un élément ou caractéristique est désigné(e) comme étant « directement sur », « directement mis(e) en prise avec », « directement raccordé(e) à » ou « directement couplé(e) à » un autre élément ou caractéristique, il peut ne pas y avoir d'éléments ou caractéristiques intermédiaires. D'autres termes utilisés pour décrire la relation entre des éléments ou des caractéristiques doivent être interprétés d'une manière identique (par exemple, « entre » opposé à « directement entre », « adjacent » opposé à « directement adjacent », etc.).

Les termes relatifs à l'espace, tels que « haut », « bas », « central », « interne », « externe », « au-dessous », « dessous », « inférieur », « au-dessus », « supérieur », et similaires peuvent être utilisés ici par souci de faciliter la description pour décrire la relation d'un élément ou d'une caractéristique par rapport à un(e) autre (d'autres) élément(s) ou caractéristique(s), comme illustré sur les dessins. Les termes relatifs à l'espace peuvent être prévus pour englober différentes orientations d'un dispositif à l'usage ou en fonctionnement en plus de l'orientation illustrée sur les dessins. Par exemple, si le dispositif sur les dessins est retourné, les éléments décrits comme étant « dessous » ou « au-dessous » des autres éléments ou caractéristiques sont alors orientés « au-dessus » des autres éléments ou caractéristiques. Ainsi, le terme exemplaire « dessous » peut englober à la fois l'orientation de dessus et de dessous. Le dispositif peut être sinon orienté (entraîné en rotation à 90 degrés ou à d'autres orientations) et les descriptifs relatifs à l'espace utilisés ici, interprétés en conséquence.

Bien que les termes « premier », « second », etc. peuvent être utilisés ici pour décrire différents éléments, composants, régions, couches, sections et/ou paramètres, ces éléments, composants, régions, couches, sections et/ou paramètres ne doivent pas être limités par ces termes. Ces termes sont uniquement utilisés pour distinguer un élément, composant, région, couche ou section d'une autre région, couche ou section. Ainsi, un premier élément, composant, région, couche ou section abordé(e) ici peut être qualifié(e) de second élément, composant, région, couche ou section sans pour autant s'éloigner des enseignements de la présente invention.

Comme représenté sur les figures 1 à 3, le système 10 est configuré pour être utilisé dans un arbre d'entraînement (arbre de transmission) 100 d'un boîtier de relais d'accessoires (ci-après « la boîtier de relais ») (non représenté) d'un moteur d'aéronef (non représenté). Cependant, on envisage que le système 10 puisse être configuré pour être utilisé dans un boîtier de relais non dédié aux accessoires. De plus ou en variante, on envisage que le système 10 puisse être configuré pour être utilisé dans une application non aérospatiale. L'arbre d'entraînement 100 a un cycle de fonctionnement comprenant un état de rotation dans lequel l'arbre d'entraînement 100 tourne autour d'un axe de rotation A_{R} (voir les figures 2 - 3). A la fin du cycle de fonctionnement, l'arbre d'entraînement 100 effectue une transition dans un état de repos dans lequel la rotation de l'arbre d'entraînement 100 est arrêtée.

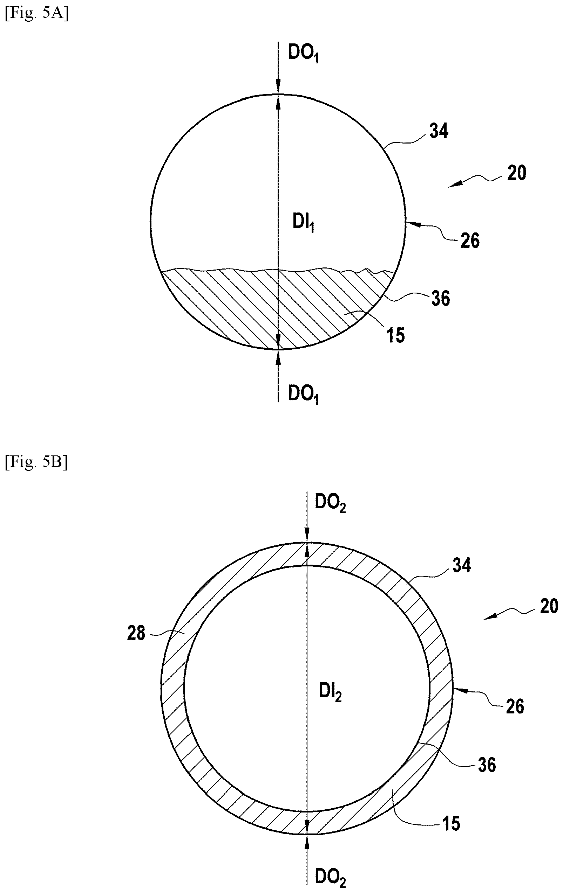

Comme représenté sur les figures 5A à 5B, le système 10 est configuré pour fournir un fluide 15 à un ou plusieurs ensembles de cannelures 102 dans le boîtier de relais. De plus, on envisage que le fluide 15 puisse être amené vers l'axe de rotation A_{R}. Dans le mode de réalisation décrit, le fluide 15 est un lubrifiant configuré pour refroidir, réduire la friction et ainsi optimiser le fonctionnement et la durée de vie des pièces mobiles, telles que les cannelures 102, dans le boîtier de relais. En référence aux figures 1 à 3, les cannelures 102 peuvent être incluses sur ou dans un ou plusieurs parmi l'arbre d'entraînement 100 et un arbre d'entraînement d'accessoire 120. Dans le mode de réalisation décrit, les cannelures 102 sont incluses dans l'arbre d'entraînement 100 et à une extrémité de l'arbre d'entraînement d'accessoire 120. Le système 10 peut être configuré pour fournir le fluide à un joint (joint à cannelures) entre les cannelures 102 de l'arbre d'entraînement 100 et/ou les cannelures 102 de l'arbre d'entraînement d'accessoire 120. De plus ou en variante, les cannelures 102 peuvent être incluses plus loin d'un axe central (centre) de l'arbre d'entraînement d'accessoire 120 et/ou sur un arbre d'entraînement de couplage. Un volume du fluide 15 à amener aux cannelures 102 par le système 10 peut dépendre de la longueur des cannelures 102 et/ou d'un diamètre et de la longueur axiale d'une zone de l'arbre d'entraînement 100 entourant les cannelures 102 où les cannelures doivent baigner dans le fluide 15.

Comme représenté sur la figure 1, l'arbre d'entraînement 100 peut comprendre un premier déversoir 104 positionné dans l'arbre d'entraînement 100. Le premier déversoir 104 est configuré pour obstruer un écoulement du fluide 15 de l'insert 20 aux cannelures 102 dans l'arbre d'entraînement 100. Le premier déversoir 104 est positionné de manière adjacente à et/ou entre les cannelures 102 et une première extrémité 22 de l'insert 20. En variante, on envisage que le premier déversoir 104 puisse être formé de manière solidaire sur l'insert 20 au niveau de la première extrémité 22 de l'insert 20. Dans cet agencement en variante, l'arbre d'entraînement 100 peut comprendre une butée configurée pour fixer le positionnement de l'insert 20 dans l'arbre d'entraînement 100. Une première interface 106 peut être définie entre le premier déversoir 104 et l'insert 20. L'arbre d'entraînement 100 peut comprendre un second déversoir 108 positionné dans l'arbre d'entraînement 100, qui est configuré pour obstruer un écoulement du fluide 15 d'une conduite d'alimentation (non représentée) à l'insert 20 dans l'arbre d'entraînement 100. Le second déversoir 108 est positionné de manière adjacente à et/ou entre la conduite d'alimentation et une seconde extrémité 24 de l'insert 20, qui est opposée à la première extrémité 22 de l'insert 20. Une seconde interface 110 peut être définie entre le second déversoir 108 et l'insert 20. L'insert 20 peut être positionné entre le premier déversoir 104 et le second déversoir 108. Un volume du fluide 15 à amener dans le système 10 peut dépendre d'un diamètre et/ou de la hauteur du premier déversoir 104 et du second déversoir 108. Ainsi, des changements du point de vue du diamètre et/ou de la hauteur des premier et second déversoirs 104, 108 peuvent être réalisés pour contrôler un volume du fluide 15 à amener dans le système 10, ainsi que pour la ventilation dans le système 10 afin d'équilibrer la pression dans le système 10.

Comme représenté sur les figures 1 à 5B, l'insert 20 du système 10 est configuré pour amener le fluide 15 aux cannelures 102 de l'arbre d'entraînement 100. De plus ou en variante, l'insert 20 du système 10 est configuré pour amener le fluide 15 aux cannelures 102 de l'arbre d'entraînement d'accessoire 120 et à l'axe central de l'arbre d'entraînement d'accessoire 120. L'insert 20 est configuré pour être positionné dans l'arbre d'entraînement 100 et pour tourner autour de l'axe de rotation A_{R}. La rotation de l'arbre d'entraînement 100 fait tourner l'insert 20. L'insert 20 comprend une paroi d'insert 26 s'étendant le long de l'axe de rotation A_{R}. La paroi d'insert 26 s'étend à partir de la première extrémité 22 jusqu'à la seconde extrémité 24 de l'insert 20. Dans le mode de réalisation décrit, la paroi d'insert 26 est cylindrique et s'étend de manière concentrique dans l'arbre d'entraînement 100 le long de l'axe de rotation A_{R}. En référence aux figures 5A à 5B, l'insert 20 comprend un réservoir 28 défini par la paroi d'insert 26 configurée pour stocker du lubrifiant afin d'alimenter les cannelures 102.

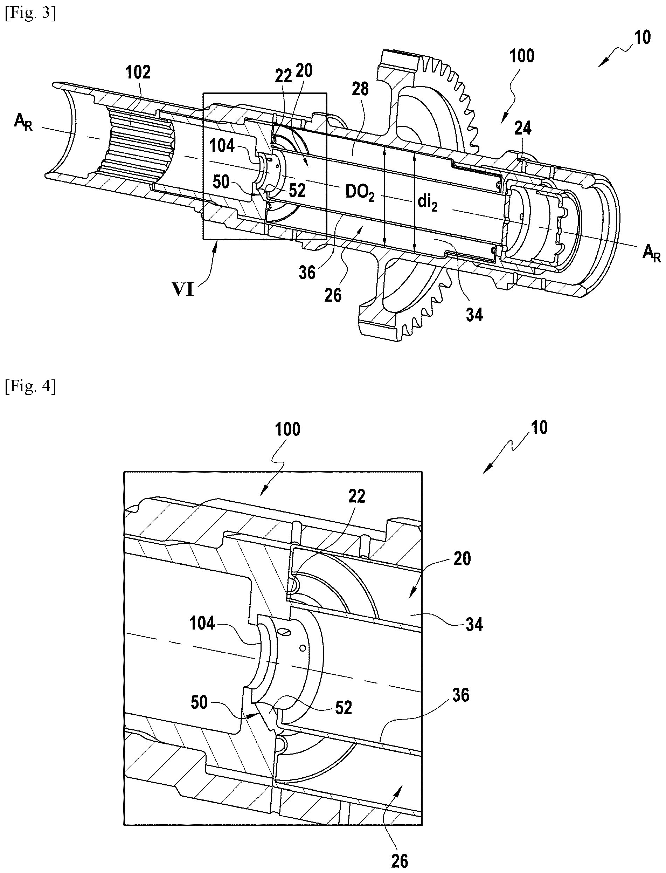

Comme représenté sur les figures 1 et 4, l'insert 20 comprend une buse 50. La buse 50 est incluse au niveau de la première extrémité 22 de l'insert 20. De plus ou en variante, l'insert 20 peut comprendre plus d'une buse 50. Les buses 50 peuvent être agencées de manière circonférentielle au niveau de la première extrémité 22 de l'insert 20. La buse 50 est en communication avec la première interface 106 et/ou le premier déversoir 104 et les cannelures 102 de l'arbre d'entraînement 100 et/ou les cannelures 102 et l'axe central de l'arbre d'entraînement d'accessoire 120. La buse 50 est également en communication avec le réservoir 28 de l'insert 20. De plus, la buse 50 est en communication avec la conduite d'alimentation. La buse 50 définit un conduit 52 s'étendant à travers la paroi d'insert 26. Le conduit 52 s'étend à partir d'une première ouverture 54 jusqu'à une seconde ouverture 56. La première ouverture 54 est en communication avec la première interface 106 et/ou le premier déversoir 104 et les cannelures 102 de l'arbre d'entraînement 100 et/ou les cannelures 102 et l'axe central de l'arbre d'entraînement d'accessoire 120. Ainsi, la buse 50 est configurée pour diriger un jet du fluide 15 stocké dans le réservoir 28 à travers l'interface 106 et au-delà du déversoir 104 de sorte que le jet du fluide 15 est amené aux cannelures 102 de l'arbre d'entraînement 100, aux cannelures 102 de l'arbre d'entraînement d'accessoire 120 et/ou à l'axe central de l'arbre d'entraînement d'accessoire 120. De plus ou en variante, la première ouverture 54 peut être à une première distance radiale de l'axe de rotation A_{R} et la seconde ouverture 56 peut être à une seconde distance radiale de l'axe de rotation A_{R}. On envisage que les différentes distances radiales de la première ouverture 54 et de la seconde ouverture 56 permettent à la buse 50 d'améliorer la direction du jet du fluide 15. La seconde ouverture 56 est en communication avec le réservoir 28. De plus, la première ouverture 54 est en communication avec la conduite d'alimentation. Ainsi, la buse 50 est également configurée pour être une entrée et/ou pour amener le fluide 15 au réservoir 28 de l'insert 20. De plus ou en variante, on envisage que l'insert 20 peut comprendre une entrée séparée de la buse 50. Dans cet agencement en variante, l'entrée comprend une valve à une voie, de sorte que le fluide 15 peut être amené au réservoir 28 en passant par l'entrée mais ne peut pas être déchargé du réservoir 28 par l'entrée.

Comme illustré par les figures 2 à 3, l'insert 20 est configuré pour effectuer une transition entre un état dilaté et un état non dilaté (l'état non dilaté peut également être désigné ici sous le terme de « état contracté »). L'état dilaté augmente le diamètre de l'insert 20 pour permettre à l'insert 20 de recevoir un plus grand volume de fluide 15 pour alimenter les cannelures 102. Le système 10 est configuré pour ne fournir que le fluide 15 aux cannelures 102 pendant l'état de repos afin de protéger la conduite d'alimentation en fluide contre l'épuisement. L'état non dilaté diminue le diamètre de l'insert 20 pour permettre au fluide 15 d'atteindre une hauteur suffisante dans l'insert 20 pour être amené aux cannelures 102. A cette fin, la paroi d'extrémité 26 comprend une partie élastiquement déformable (la « partie élastiquement déformable » peut être désignée ici sous le terme de « partie de paroi d'insert externe élastiquement déformable) 34 qui peut effectuer une transition entre l'état dilaté et l'état non dilaté. Dans le mode de réalisation décrit, la partie élastiquement déformable 34 est réalisée avec un matériau élastomère. La partie élastiquement déformable 34 s'étend entre la première extrémité 22 et la seconde extrémité 24 de l'insert. La partie élastiquement déformable 34 peut s'étendre à partir de la première extrémité 22 à la seconde extrémité 24 de l'insert 20. La partie élastiquement déformable 34 peut réduire le poids du système 10.

Pendant le cycle de fonctionnement, la partie élastiquement déformable 34 et donc l'insert 20, est configurée pour se dilater à l'état dilaté pendant l'état de rotation de l'arbre d'entraînement 100. Pendant l'état de rotation 100, un volume de rotation du fluide 15 dans le réservoir 28 de l'insert 20 forme une forme toroïdale due à un effet centrifuge généré par la rotation de l'arbre d'entraînement 100 (voir la figure 5B). La partie élastiquement déformable 34 se dilate pendant l'état de rotation de l'arbre d'entraînement 100 due à une force centrifuge exercée sur la partie élastiquement déformable 34 par le volume de rotation du fluide 15 pendant la rotation de l'arbre d'entraînement 100 (voir la figure 3). Dans le mode de réalisation décrit, la partie élastiquement déformable 34 peut subir se dilater à une vitesse de rotation de seuil de l'arbre d'entraînement 100 dans une plage comprise entre 10% du régime de ralenti du moteur et le régime de ralenti du moteur. A la fin du cycle de fonctionnement, la partie élastiquement déformable 34 et donc l'insert 20, est configurée pour se contracter à l'état non dilaté pendant l'arrêt de la rotation de l'arbre d'entraînement 100 (voir la figure 2). On envisage que le terme « arrêt de rotation » tel qu'utilisé ici peut être compris pour signifier une période pendant laquelle la rotation de l'arbre d'entraînement 100 ralentit à l'état de repos de l'arbre d'entraînement 100. La partie élastiquement déformable 34 peut également être configurée pour se contracter à l'état non dilaté lorsque la rotation de l'arbre d'entraînement 100 cesse et/ou est arrêtée. Dans le mode de réalisation décrit, la partie élastiquement déformable 34 peut se contracter à une vitesse de rotation de seuil de l'arbre d'entraînement 100 dans une plage comprise entre 50% du régime de ralenti du moteur et 0 RPM (tour par minute), mais de manière préférée entre toutes, inférieure à 10% du régime de ralenti du moteur. Pendant l'état de repos, le fluide 15 dans le réservoir 28 de l'insert 20 peut s'établir à un volume affaissé du fluide 15 ayant une hauteur suffisante pour atteindre les cannelures 102 (voir la figure 5A). Cependant, la contraction de la partie élastiquement déformable 34 et/ou la décharge d'une pression centrifuge dans l'insert 20 provoquent principalement l'éjection du fluide 15 hors de la buse 50 vers les cannelures 102 et/ou l'axe central de l'arbre d'entraînement d'accessoire 120.

Comme représenté sur les figures 5A à 5B, à l'état non dilaté, la partie élastiquement déformable 34 de l'insert 20 a un premier diamètre intérieur DI₁ et un premier diamètre extérieur DO₁. A l'état dilaté, l'insert 20 a un second diamètre intérieur DI₂ et un second diamètre extérieur DO₂. Dans le mode de réalisation décrit, le premier diamètre intérieur D1₁ et le premier diamètre extérieur DO₁ peuvent être une fraction sensiblement plus petite du second diamètre intérieur DI₂ et du second diamètre extérieur DO₂. Comme représenté sur les figures 2 à 3, l'arbre d'entraînement 100 a un diamètre intérieur di₁. Dans le mode de réalisation décrit, le premier diamètre extérieur DO₁ de l'insert est une fraction du diamètre intérieur di₁ de l'arbre d'entraînement 100. De plus, le second diamètre extérieur DO₂ de la partie élastiquement déformable 34 de l'insert 20 est équivalent ou sensiblement équivalent au diamètre intérieur di₁ de l'arbre d'entraînement 100. La différence entre le premier diamètre extérieur DO₁ de l'insert 20 et le diamètre intérieur di₁ de l'arbre d'entraînement 100 permet de définir un espace 40 entre l'insert 20 et l'arbre d'entraînement 100 lorsque l'insert 20 est à l'état non dilaté. L'espace 40 est un espacement permettant à l'insert d'effectuer une transition de l'état non dilaté à l'état dilaté. La différence négligeable entre le second diamètre extérieur DO₂ de l'insert 20 et le diamètre intérieur di₁ de l'arbre d'entraînement 100 doit permettre à l'insert 20 de se conformer au diamètre intérieur di₁ de l'arbre d'entraînement 100 sans endommager la partie élastiquement déformable 34 de l'insert 20.

Le positionnement de l'insert 20 dans l'arbre d'entraînement 100 est configuré pour être maintenu pendant l'état de rotation et l'état de repos. Comme représenté sur la figure 1, la paroi d'insert 26 comprend également une partie rigide (la « partie rigide » peut également être désignée ici sous le terme de « partie de paroi d'insert interne rigide ») 36. La partie rigide 36 s'étend entre la première extrémité 22 et la seconde extrémité 24 de l'insert 20. La partie rigide 36 s'étend de la première extrémité 22 à la seconde extrémité 24 de l'insert 20. La partie rigide 36 est configurée pour être orientée dans la partie élastiquement déformable 34 et pour s'étendre de manière concentrique avec la partie élastiquement déformable 34. Le réservoir 28 est défini entre la partie rigide 36 et la partie élastiquement déformable 34. Le conduit 52 s'étend à travers la partie rigide 36 au niveau de ou de manière adjacente à la première extrémité 22. La partie rigide 36 peut être reliée à la partie élastiquement déformable 34. De plus, la partie rigide 36 peut être montée par serrage et/ou montée à la presse dans l'arbre d'entraînement 100 pour maintenir la position et empêcher la rotation de l'insert 20 dans l'arbre d'entraînement 100. Cependant, on envisage que l'homme du métier notera que la partie rigide 36 peut être fixée dans l'arbre d'entraînement 100 par d'autres configurations, comme le filetage, la liaison ou le collage dans l'arbre d'entraînement 100. Dans le mode de réalisation décrit, la partie rigide 36 est construite à partir d'acier ou d'aluminium, mais on envisage que l'homme du métier notera que la partie rigide 36 peut être construite avec n'importe quel autre matériau rigide qui peut être compatible avec l'insert 20.

En fonctionnement, l'arbre d'entraînement 100 effectue une transition de l'état de repos à l'état de rotation. L'insert 20 est configuré pour être alimenté avec le fluide 15 par le biais de la buse 50 pendant l'état de rotation et pour fournir le fluide aux cannelures 102 par le biais de la buse 50, pendant l'état de repos. Pendant la rotation, le fluide 15 est fourni de la conduite d'alimentation à l'insert 20. Le fluide 15 pénètre dans l'insert 20 par la première ouverture 54 de la buse 50, se déplace à travers le conduit 52 et pénètre dans le réservoir 28 par la seconde ouverture 56 de la buse 50. Pendant la rotation de l'arbre d'entraînement 100, le fluide 15 forme le volume de rotation dans l'insert 20 et applique la force centrifuge sur la partie élastiquement déformable 34. La partie élastiquement déformable 34 se dilate de l'état non dilaté à l'état dilaté. A l'état dilaté, le diamètre DI₂, DO₂ de la partie élastiquement déformable 34 de l'insert 20 est augmenté, augmentant ainsi le volume du réservoir 28 de l'insert 20. La quantité de fluide 15 à fournir à l'insert 20 peut dépendre du second diamètre intérieur DO₂ de l'insert 20 à l'état dilaté. Ainsi, le diamètre accru DI₂, DO₂ de l'insert 20, et donc le volume accru de l'insert 20, permet à l'insert 20 de recevoir un plus grand volume de fluide 15 pour que le système 10 alimente, dans un jet de fluide 15, les cannelures 102 de l'arbre d'entraînement 100 et les cannelures 102 de l'arbre d'entraînement d'accessoire 120. De plus, le plus grand volume de fluide 15 permet au système 10 d'amener le jet de fluide 15 à l'axe central de l'arbre d'entraînement d'accessoire 120. Ainsi, le plus grand volume de jet de fluide 15 permet également au système 10 de fournir du fluide aux autres cannelures 102 qui peuvent être présentes plus loin sur l'arbre d'entraînement d'accessoire 120.

A la fin du cycle de fonctionnement, l'arbre d'entraînement 100 effectue une transition de l'état de rotation à l'état de repos. A l'état de repos et/ou pendant l'arrêt de la rotation, le fluide 15 n'est plus fourni de la conduite d'alimentation à l'insert 20. Pendant l'arrêt de la rotation de l'arbre d'entraînement 100 et/ou lorsque la rotation de l'arbre d'entraînement 100 s'arrête, la partie élastiquement déformable 34 se contracte de l'état dilaté à l'état non dilaté et le volume de rotation de fluide 15 s'établit dans le volume affaissé du fluide 15. La contraction de la partie élastiquement déformable 34 et/ou la décharge de la pression centrifuge dans l'insert 20 amènent le fluide 15 à être éjecté hors de la buse 50 vers les cannelures 102. Le jet du fluide 15 peut se déplacer sur de plus longues distances, avec un moment plus élevé, sans dissipation - en contraste au fluide 15 qui est projeté ou déversé hors de l'insert 20. La buse 50 est configurée pour diriger le jet du fluide 15 vers des zones spécifiques dans l'arbre d'entraînement 100. Le jet du fluide 15 est déchargé par la première interface 106 et au-delà du premier déversoir 104 sur les cannelures 102 de l'arbre d'entraînement 100, les cannelures 102 de l'arbre d'entraînement d'accessoire 120 et/ou l'axe central de l'arbre d'entraînement d'accessoire 120. En raison du volume accru du fluide 15 dans le réservoir 28 de l'insert 20, d'un écoulement dirigé plus puissant du fluide 15 dû au fluide 15 éjecté de la buse 50, le fluide 15 alimenté à l'axe central de l'arbre d'entraînement d'accessoire 120 atteint également d'autres cannelures 102 qui peuvent être présentes plus loin sur l'arbre d'entraînement d'accessoire 120.

Bien que la présente invention a été décrite ici en référence aux modes de réalisation particuliers, il faut comprendre que ces modes de réalisation ne sont qu'illustratifs des principes et des applications de la présente invention.

Il est prévu que la spécification et les exemples soient considérés comme exemplaires uniquement, avec la véritable portée de l'invention qui est indiquée par les revendications suivantes.

De plus, toutes les caractéristiques décrites d'un appareil peuvent être transposées, seules ou en combinaison, à un procédé et vice versa.

## Revendications

1. Insert (20) pour fournir un fluide (15) aux cannelures (102) d'un arbre d'entraînement (100), l'insert (20) s'étendant le long d'un axe de rotation (A_{R}) et configuré pour tourner autour de l'axe de rotation (A_{R}), la rotation de l'arbre d'entraînement (100) faisant tourner l'insert (20), l'insert (20) comprenant :
une paroi d'insert (26) ayant une partie de paroi d'insert interne rigide (36) et une partie de paroi d'insert externe élastiquement déformable (34) s'étendant entre une première extrémité (22) et une seconde extrémité (24) de l'insert (20) le long de l'axe de rotation (A_{R}) ;
un réservoir (28) défini par la paroi d'insert (26) pour stocker un fluide (15) ; et
une buse (50) positionnée au niveau de la première extrémité (22) de l'insert (20), la buse (50) définissant un conduit (52) en communication avec le réservoir (28) ;
dans lequel la partie de paroi d'insert externe élastiquement déformable (34) est configurée pour se déplacer vers un état dilaté, pendant la rotation de l'insert et lorsque le fluide (15) est amené au réservoir (28), et un état non dilaté, lorsque la rotation de l'insert (20) et l'alimentation du fluide (15) au réservoir (28) sont arrêtées, et le déplacement de la partie de paroi d'insert externe élastiquement déformable (34) vers l'état non dilaté, force le fluide (15) à être déchargé par la buse (50).

2. Insert (20) selon la revendication 1, dans lequel la buse (50) est configurée pour amener le fluide (15) au réservoir (28) pendant la rotation de l'insert.

3. Insert (20) selon l'une quelconque des revendications 1 à 2, dans lequel la partie de paroi d'insert externe élastiquement déformable (34) comprend un matériau élastomère.

4. Insert (20) selon l'une quelconque des revendications 1 à 3, dans lequel la partie de paroi d'insert interne rigide (36) est reliée à la partie de paroi d'insert externe élastiquement déformable (34).

5. Insert (20) selon l'une quelconque des revendications 1 à 4, dans lequel le conduit (52) s'étend à travers la partie de paroi d'insert interne rigide (36).

6. Système (10) pour fournir un fluide (15) aux cannelures (102) d'un arbre d'entraînement (100), le système comprenant :
un arbre d'entraînement (100) comprenant des cannelures (102) et un déversoir (104) positionné de manière adjacente aux cannelures (102), l'arbre d'entraînement (100) étant configuré pour tourner autour d'un axe de rotation (A_{R}) ;
un insert (20) selon l'une quelconque des revendications 1 à 5, la paroi d'insert (26) s'étendant de manière concentrique avec l'arbre d'entraînement (100) le long de l'axe de rotation (A_{R}) ; et
dans lequel la buse (50) est configurée pour décharger un jet de fluide (15) pendant l'arrêt de la rotation de l'arbre d'entraînement (100).

7. Système (10) selon la revendication 6, dans lequel la buse (50) est configurée pour fournir le fluide (15) au réservoir (28) pendant la rotation de l'arbre d'entraînement (100).

8. Système (10) selon l'une quelconque des revendications 6 à 7, dans lequel l'insert (20) est en communication avec le déversoir (104) et les cannelures (102) au niveau d'une interface (106) dans l'arbre d'entraînement (100).

9. Système (10) selon la revendication 8, dans lequel la buse (50) est configurée pour diriger le jet de fluide (15) à travers l'interface (106) et au-delà du déversoir (104) jusqu'aux cannelures (102) lorsque la rotation de l'arbre d'entraînement (100) est arrêtée.

10. Système (10) selon l'une quelconque des revendications 6 à 9, dans lequel l'insert (20) a un premier diamètre extérieur (DO₁) à l'état non dilaté et un second diamètre extérieur (DO₂) à l'état dilaté et le premier diamètre extérieur est inférieur à un diamètre intérieur (di₁) de l'arbre d'entraînement (100) de sorte qu'un espace (40) est défini entre l'insert et l'arbre d'entraînement à l'état non dilaté.

11. Système (10) selon l'une quelconque des revendications 6 à 10, dans lequel la partie de paroi d'insert interne rigide (36) est fixée sur l'arbre d'entraînement (100) pour maintenir la position et empêcher la rotation de l'insert (20) dans l'arbre d'entraînement.

12. Système (10) selon l'une quelconque des revendications 6 à 11, dans lequel la buse (50) est configurée pour diriger le jet de fluide (15) vers les cannelures (102) et vers l'axe de rotation (A_{R}) lorsque la rotation de l'arbre d'entraînement (100) est arrêtée.

## Patentansprüche

1. Einsatz (20) zur Zufuhr eines Fluids (15) zu den Keilnuten (102) einer Antriebswelle (100), wobei sich der Einsatz (20) entlang einer Drehachse (A_{R}) erstreckt und dazu ausgestaltet ist, sich um die Drehachse (A_{R}) zu drehen, wobei die Drehung der Antriebswelle (100) den Einsatz (20) dazu veranlasst, sich zu drehen, wobei der Einsatz (20) umfasst:
eine Einsatzwand (26), die einen starren inneren Teil (36) der Einsatzwand und einen elastisch verformbaren äußeren Teil (34) der Einsatzwand aufweist und die sich zwischen einem ersten Ende (22) und einem zweiten Ende (24) des Einsatzes (20) entlang der Drehachse (A_{R}) erstreckt,
einen Behälter (28), der durch die Einsatzwand (26) definiert ist, um ein Fluid (15) zu speichern, und
eine Düse (50), die auf Höhe des ersten Endes (22) des Einsatzes (20) positioniert ist, wobei die Düse (50) eine Leitung (52) definiert, die mit dem Behälter (28) in Kommunikation steht,
wobei der elastisch verformbare äußere Teil (34) der Einsatzwand dazu ausgestaltet ist, sich während der Drehung des Einsatzes und wenn das Fluid (15) zu dem Behälter (28) geleitet wird, in einen erweiterten Zustand zu verschieben, und in einen nicht erweiterten Zustand, wenn die Drehung des Einsatzes (20) und die Versorgung des Behälters (28) mit Fluid (15) angehalten sind, und die Verschiebung des elastisch verformbaren äußeren Teils (34) der Einsatzwand in den nicht erweiterten Zustand das Fluid (15) dazu zwingt, durch die Düse (50) abgelassen zu werden.

2. Einsatz (20) nach Anspruch 1, wobei die Düse (50) dazu ausgestaltet ist, das Fluid (15) während der Drehung des Einsatzes zu dem Behälter (28) zu leiten.

3. Einsatz (20) nach einem der Ansprüche 1 bis 2, wobei der elastisch verformbare äußere Teil (34) der Einsatzwand ein Elastomermaterial umfasst.

4. Einsatz (20) nach einem der Ansprüche 1 bis 3, wobei der starre innere Teil (36) der Einsatzwand mit dem elastisch verformbaren äußeren Teil (34) der Einsatzwand verbunden ist.

5. Einsatz (20) nach einem der Ansprüche 1 bis 4, wobei die Leitung (52) sich durch den starren inneren Teil (36) der Einsatzwand erstreckt.

6. System (10) zur Zufuhr eines Fluids (15) zu den Keilnuten (102) einer Antriebswelle (100), wobei das System umfasst:
eine Antriebswelle (100), die Keilnuten (102) und einen Überlauf (104) umfasst, der benachbart zu den Keilnuten (102) positioniert ist, wobei die Antriebswelle (100) dazu ausgestaltet ist, sich um eine Drehachse (A_{R}) zu drehen,
einen Einsatz (20) nach einem der Ansprüche 1 bis 5, wobei sich die Einsatzwand (26) auf konzentrische Weise mit der Antriebswelle (100) entlang der Drehachse (A_{R}) erstreckt, und
wobei die Düse (50) dazu ausgestaltet ist, einen Fluidstrahl (15) während des Halts der Drehung der Antriebswelle (100) abzulassen.

7. System (10) nach Anspruch 6, wobei die Düse (50) dazu ausgestaltet ist, das Fluid (15) während der Drehung der Antriebswelle (100) dem Behälter (28) zuzuführen.

8. System (10) nach einem der Ansprüche 6 bis 7, wobei der Einsatz (20) auf Höhe einer Schnittstelle (106) in der Antriebswelle (100) mit dem Überlauf (104) und den Keilnuten (102) in Kommunikation steht.

9. System (10) nach Anspruch 8, wobei die Düse (50) dazu ausgestaltet ist, den Fluidstrahl (15) durch die Schnittstelle (106) und über den Überlauf (104) hinweg bis zu den Keilnuten (102) zu lenken, wenn die Drehung der Antriebswelle (100) angehalten wird.

10. System (10) nach einem der Ansprüche 6 bis 9, wobei der Einsatz (20) in dem nicht erweiterten Zustand einen ersten Außendurchmesser (DO₁) und in dem erweiterten Zustand einen zweiten Außendurchmesser (DO₂) aufweist und der erste Außendurchmesser kleiner als ein Innendurchmesser (di₁) der Antriebswelle (100) ist, sodass zwischen dem Einsatz und der Antriebswelle in dem nicht erweiterten Zustand ein Raum (40) definiert ist.

11. System (10) nach einem der Ansprüche 6 bis 10, wobei der starre innere Teil (36) der Einsatzwand an der Antriebswelle (100) befestigt ist, um die Position zu halten und die Drehung des Einsatzes (20) in der Antriebswelle zu verhindern.

12. System (10) nach einem der Ansprüche 6 bis 11, wobei die Düse (50) dazu ausgestaltet ist, den Fluidstrahl (15) zu den Keilnuten (102) hin und zu der Drehachse (A_{R}) hin zu lenken, wenn die Drehung der Antriebswelle (100) angehalten wird.

## Claims

1. An insert (20) for supplying a fluid (15) to splines (102) of a drive shaft (100), the insert (20) extending along an axis of rotation (A_{R}) and configured to rotate around the axis of rotation (A_{R}), the rotation of the drive shaft (100) causing the insert (20) to rotate, the insert (20) comprising:
an insert wall (26) having a rigid inner insert wall portion (36) and an elastically deformable outer insert wall portion (34) extending between a first end (22) and a second end (24) of the insert along the axis of rotation (A_{R});
a reservoir (28) defined by the insert wall (26) for storing a fluid (15);
a nozzle (50) positioned at the first end (22)of the insert (20), the nozzle (50) defining a duct (52) in communication with the reservoir (28);
wherein, the elastically deformable outer insert wall portion (34) is configured to move between an expanded state, when the fluid (15) is supplied to the reservoir, and an unexpanded state, when rotation of the insert (20) and supply of fluid (15) to the reservoir (28) are ceased, and movement of the elastically deformable outer insert wall portion (34) to the unexpanded state forces the fluid (15) to be discharged through the nozzle (50).

2. The insert (20) according to claim 1, wherein the nozzle (50) is configured to supply the fluid to the reservoir (28) during rotation of the insert.

3. The insert according to claim 1, wherein the elastically deformable outer insert wall portion comprises an elastomeric material.

4. The insert (20) according to any of claims 1 to 2, wherein the rigid inner insert wall portion (36) is bonded to the elastically deformable outer insert wall portion (34).

5. The insert (20) according to any of claims 1 to 4, wherein the duct (52) extends through the rigid inner insert wall portion (36).

6. A system (10) for supplying a fluid (15) to splines (102) of a drive shaft (100), the system comprising:
a drive shaft (100) including splines (102) and a weir (104) positioned adjacent the splines (102), the drive shaft (100) configured to rotate about an axis of rotation (A_{R});
an insert (20) according to any of claims 1 to 5, the insert wall (26) extending concentrically with the drive shaft (100) along the axis of rotation (A_{R}); and
wherein, the nozzle (50) is configured to discharge a jet of the fluid (15) during cessation of rotation of the drive shaft (100).

7. The system (10) according to claim 6, wherein the nozzle (50) is configured to supply the fluid (15) to the reservoir (28) during rotation of the drive shaft (100).

8. The system (10) according to any of claims 6 to 7, wherein the insert is in communication with the weir and the splines at an interface within the drive shaft.

9. The system (10) according to claim 8, wherein the nozzle (50) is configured to target the jet of the fluid (15) through the interface (106) and past the weir (104) to the splines (102) when rotation of the drive shaft (100) is ceased.

10. The system (10) according to any of claims 6 to 9, wherein the insert (20) has a first outside diameter (DO₁) in the unexpanded state and a second outside diameter (DO₂) in the expanded state and the first outside diameter is less than an inside diameter (di₁) of the drive shaft (100) so that a gap (40) is defined between the insert and the drive shaft in the unexpanded state.

11. The system (10) according to any of claims 6 to 10, wherein the rigid inner insert wall portion (36) is secured to the drive shaft (100) to maintain position and anti-rotation of the insert (20) within the drive shaft.

12. The system (10) according to any of claims 6 to 11, wherein the nozzle (50) is configured to target the jet of the fluid (15) to the splines (102) and toward the axis of rotation (A_{R}) when rotation of the drive shaft (100) is ceased.
